Europäisches Patentamt

European Patent Office

Office européen des brevets

(11) Numéro de publication: **0 329 531**

**A1**

## DEMANDE DE BREVET EUROPEEN

(21) Numéro de dépôt: **89400363.1**

(22) Date de dépôt: **09.02.89**

(51) Int. Cl.4: **G 05 B 19/18**

(30) Priorité: **18.02.88 FR 8801924**

(43) Date de publication de la demande:
**23.08.89 Bulletin 89/34**

(84) Etats contractants désignés:
**CH DE FR GB IT LI SE**

(71) Demandeur: **LA TELEMECANIQUE ELECTRIQUE**
**33 bis, avenue du Maréchal Joffre**
**F-92000 Nanterre (FR)**

(72) Inventeur: **Charles, Philippe**
**87, rue du Dr. Charcot**
**F-92000 NANTERRE (FR)**

**Guillier, Alain**
**107, Résidence Elysée 2**
**F-78170 LA CELLE SAINT CLOUD (FR)**

**Hampikian, Philippe**
**5, rue Cail**
**F-75010 PARIS (FR)**

**Thurel, Christian**
**166, Avenue de Versailles**
**F-75016 PARIS (FR)**

(74) Mandataire: **Marquer, Francis et al**
**Cabinet Moutard 35, Avenue Victor Hugo**
**F-78960 Voisins le Bretonneux (FR)**

(54) Procédé et dispositif pour l'estimation des paramètres du modèle géométrique d'un manipulateur.

(57) Le dispositif selon l'invention sert à estimer les paramètres du modèle géométrique d'un robot comprenant un organe de préhension (11) relié à un support (12) par des liaisons cinématiques animées par des actionneurs ($M_1$, $M_2$, $M_3$) pilotés par un processeur (16) recevant des informations issues de capteurs (17, 18, 19) associés auxdites liaisons. Il comprend des moyens de détection dans une série d'emplacements ($P_1$ à $P_n$) de mesure faisant intervenir une sphère ($S_1$) portée par ledit organe (11) et un dispositif de mesure pouvant se monter sur une pluralité de moyens d'assemblage prévus sur une embase, qui correspondent auxdits emplacements et dont les coordonnées ont été préalablement déterminées. L'estimation des paramètres est effectuée par le processeur (16) à partir des informations fournies par les capteurs (17, 18, 19) pour l'ensemble des emplacements de mesure ($P_1$ à $P_n$).

L'invention permet d'évaluer les susdits paramètres dans des conditions aussi proches que possible de celles dans lesquelles le robot devra opérer.

FIG. 1

Description

# PROCEDE ET DISPOSITIF POUR L'ESTIMATION DES PARAMETRES DU MODELE GEOMETRIQUE D'UN MANIPULATEUR.

La présente invention a pour objet un procédé pour l'estimation des paramètres du modèle géométrique d'un manipulateur, ainsi qu'un dispositif de mesure servant à la mise en oeuvre dudit procédé.

Elle concerne plus particulièrement, mais non exclusivement, un manipulateur de type "robot", comprenant un organe de préhension (porte-outils) relié à une structure support par au moins une liaison cinématique animée par des moyens d'actionnement, ainsi qu'une pluralité de capteurs aptes à déterminer les valeurs des variables de cette liaison cinématique sur lesquelles agissent les moyens d'actionnement.

La commande de ces moyens d'actionnement est habituellement élaborée par un processeur à partir d'un modèle géométrique qui établit une correspondance biunivoque entre les valeurs mesurées des variables de la liaison cinématique et la position de l'organe de préhension (ou de l'élément porté par ce dernier) dans un espace de variables approprié.

Il est clair que ce modèle géométrique fait intervenir des paramètres propres à la structure du manipulateur. Ainsi, dans le cas où la liaison cinématique est constituée par des segments reliés les uns aux autres par des liaisons rotatives (articulations), et où les variables sont des angles mesurés à chacune de ces liaisons à l'aide de codeurs incrémentaux, les susdits paramètres consistent alors notamment en la longueur des segments, les coefficients de réduction des réducteurs associés au codeur, la position de référence des codeurs (position O), et les flexions qui peuvent résulter de la disposition relative des segments, dans le cas de manipulateurs à circuiterie fermée.

Or, il s'avère que ces paramètres sont variables selon les conditions de fonctionnement du manipulateur et sont connus avec peu de précision lors de la construction du manipulateur, et il convient donc de les évaluer avec précision.

L'invention a donc tout d'abord pour but d'effectuer une telle évaluation dans des conditions aussi proches que possible de celles dans lesquelles le manipulateur devra opérer.

Pour parvenir à ce résultat, elle propose un procédé pour l'estimation des paramètres du modèle géométrique d'un manipulateur du type susdit, ce procédé comprenant les phases opératoires suivantes :
- la détermination d'une série de zones de détection à l'intérieur de chacune desquelles l'organe de préhension peut occuper un emplacement de mesure dont les coordonnées, dans un premier système de référence commun, peuvent être déterminées à l'aide d'un dispositif de mesure ;
- la mise en place successive de l'organe de préhension dans lesdits emplacements de mesure avec, pour chacun de ces emplacements, la mesure et la mise en mémoire des coordonnées, dans le premier système de coordonnées, de la position de l'organe de préhension, à l'aide du dispositif de mesure, et le relevé et la mémorisation de la valeur des variables de la liaison cinématique correspondant à cette position, grâce aux détecteurs équipant normalement le manipulateur ;
- l'identification des paramètres du module géométrique, grâce à une procédure d'identification itérative comprenant une succession d'étapes comportant chacune :
. une évaluation, par le processeur, des coordonnées dans un second système de coordonnées, de la position de l'organe de préhension pour chacun des emplacements de mesure, à l'aide du modèle géométrique, en utilisant les variables de la liaison cinématique précédemment mémorisées et les valeurs des paramètres déterminées lors de l'étape précédente, la valeur initiale de ces paramètres pouvant être déterminée arbitrairement,
. le calcul, par le processeur, des erreurs entre les positions ainsi évaluées et les positions correspondantes précédemment mesurées, et
. pour chacun des paramètres, la détermination d'un incrément permettant de réduire les erreurs précédemment mesurées et la correction de ce paramètre par ledit incrément,
. la validation de la valeur des paramètres lorsque les susdites erreurs deviennent inférieures à un seuil prédéterminé.

Avantageusement, le susdit premier système de coordonnées pourra être lié à l'une des zones de détection, tandis que le second pourra être lié à la structure support du manipulateur. De même, les incréments de paramètre pourront être évalués de manière à minimiser la somme des carrés des erreurs calculées pour tous les emplacements de mesure.

Comme précédemment mentionné, l'invention concerne également un dispositif pour la mise en oeuvre du procédé précédemment défini, ce dispositif comprenant, pour la détermination de la position de l'organe de préhension, un appareillage faisant coopérer au moins un premier élément possédant une surface de révolution présentant un foyer dont les coordonnées, dans un système de référence lié à cet élément, sont prédéterminées, et un deuxième élément qui consiste en un dispositif de mesure apte à mesurer les coordonnées précises d'au moins trois points de cette surface dans un second système de référence indépendant du premier, l'un de ces deux éléments étant solidarisé à l'organe de préhension, tandis que l'autre est monté sur une embase disposée dans le volume de débattement du manipulateur.

Selon un mode de réalisation préféré de ce dispositif, le susdit premier élément présente une forme sphérique et est conformé de manière à pouvoir se fixer à l'organe de préhension, et le dispositif de mesure comprend des moyens permettant son assemblage successif sur une pluralité de moyens d'assemblage réciproques correspondants prévus sur l'embase, et dont les positions respectives sont déterminées dans un système de référence lié è l'embase.

Avantageusement, ce dispositif de mesure comportera une structure pyramidale assurant le montage de trois comparateurs dont les axes sensibles définissent un trièdre, de préférence trirectangle.

Des modes d'exécution de l'invention seront décrits ci-après, à titre d'exemples non limitatifs, avec référence aux dessins annexés dans lesquels :

La figure 1 est une représentation schématique montrant la structure simplifiée d'un robot et permettant d'illustrer le principe du procédé d'identification des paramètres du modèle géométrique de ce robot ;

La figure 2 est un schéma synoptique du circuit d'identification desdits paramètres ;

La figure 3 est une vue de dessus d'une embase sur laquelle est monté un dispositif de mesure ;

Les figures 4 et 5 sont deux vues de côté de l'ensemble représenté figure 3, dans le sens longitudinal de cet ensemble (figure 4) et dans le sens transversal (figure 5).

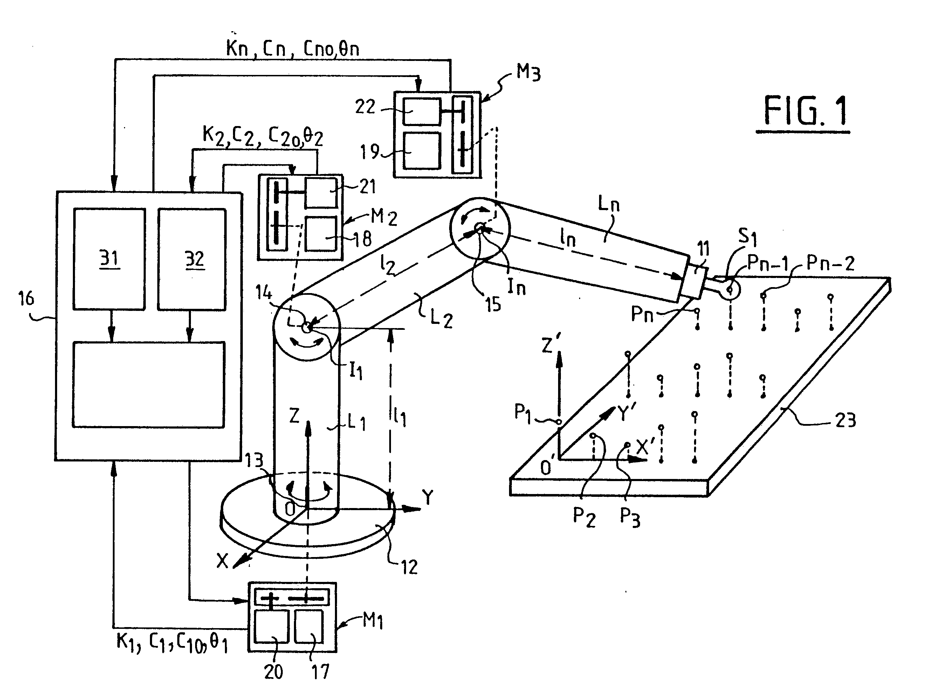

Tel que représenté sur la figure 1, le robot se compose d'un organe de préhension 11 relié à une structure support 12 par l'intermédiaire d'une liaison cinématique constituée par trois segments articulés les uns aux autres, à leurs extrémités, à savoir :

- un segment vertical $L_1$ de longueur $l_1$, monté rotatif sur la structure support 12, autour d'un axe vertical 13 ;
- un segment $L_2$ de longueur $l_2$, articulé sur l'extrémité supérieure du segment $L_1$, autour d'un axe horizontal 14 ; et
- un segment $L_n$ de longueur $l_n$, dont une extrémité est articulée sur le segment $L_2$, autour d'un axe horizontal 15, et dont l'autre extrémité porte l'organe de préhension 11.

Il convient de noter que la structure de ce robot a été volontairement simplifiée pour faciliter la compréhension de l'invention, étant entendu que cette structure pourrait comprendre un nombre n plus important de segments et de montages rotatifs. C'est la raison pour laquelle, par analogie, on a utilisé les indices 1, 2 et n pour désigner les segments $L_1$, $L_2$, $L_n$.

L'animation du robot précédemment décrit est par ailleurs assurée au moyen de motoréducteurs respectivement associés à chacun des montages rotatifs et pilotés par un processeur 16, à savoir :
- un motoréducteur $M_1$ permettant d'assurer la rotation du segment vertical $L_1$ autour de l'axe 13 ;
- un motoréducteur $M_2$ agissant sur les segments $L_1$, $L_2$ pour les faire pivoter autour de l'axe 14 ; et
- un motoréducteur $M_3$ agissant sur les segments $L_2$, $L_n$ pour les faire pivoter autour de l'axe 15.

Les variables $\theta i$ (avec $1 < i < n$) relatives à chacun de ces montages, c'est-à-dire, dans cet exemple, l'angle de rotation $\theta_1$ du segment $L_1$ sur la structure support 12, l'angle de rotation $\theta_1$ du segment $L_1$ par rapport au segment $L_2$, et l'angle de rotation $\theta_n$ du segment $L_2$ par rapport au segment $L_n$, sont détectées par des codeurs incrémentaux 17, 18, 19 pouvant comprendre leurs propres réducteurs ou même être couplées sur l'arbre de sortie des moteurs 20, 21, 22.

Ces valeurs qui sont transmises au processeur 16 par des circuits appropriés sont fonction de différents paramètres et, plus particulièrement :
- d'un paramètre Ki consistant en un coefficient propre au codeur n° i qui dépend du nombre de "pas codeur" et du rapport de réduction associé à ce codeur ;
- d'un paramètre Ci qui est un coefficient de proportionnalité entre le nombre de pas du codeur n° i et la valeur de la variable articulaire correspondante ; et
- d'un paramètre Ci0 qui permet de déterminer la valeur $\theta i$ de la variable articulaire fournie par un codeur n° i par rapport à une position de référence $\theta i0$, par exemple égale à zéro, de ce codeur.

D'une façon générale, la relation donnant la position de l'organe de préhension 11 d'un robot présentant n segments, n pivoteries et n codeurs incrémentaux, dans un repère de coordonnées lié à la structure de support 12, peut s'écrire :

$$\underline{X} = F\ (\underline{P},\ \underline{\theta}\ \text{avec}\ \underline{\theta} = \underline{K}\ .\ [\underline{C} - \underline{Co}]\ \text{tr} \qquad (1)$$

relation dans laquelle :

\# $\underline{X}$ représente les coordonnées (x, y, z) d'un point solidaire de l'organe de préhension 11 dans le système de coordonnées lié à la structure support 12,

\# F est une fonction définissant le modèle géométrique du robot,

$$\bullet \ \underline{K} \ = \ \begin{bmatrix} K_1 \\ \vdots \\ K_n \end{bmatrix} \quad \text{(matrice colonne des paramètres Ki)}$$

$$\bullet \ C \ = \ \begin{bmatrix} C_1 \\ \vdots \\ C_n \end{bmatrix} \quad \text{(matrice colonne des paramètres Ci)}$$

$$\bullet \ Co \ = \ \begin{bmatrix} C_{10} \\ \vdots \\ C_{n0} \end{bmatrix} \quad \text{(matrice colonne des paramètres Ci0)}$$

$$\bullet \ \underline{\Theta} \ = \ \begin{bmatrix} \Theta_1 \\ \vdots \\ \Theta_n \end{bmatrix} \quad \text{(matrice colonne des variables articulaires } \Theta i)$$

Par ailleurs, dans cette relation (1), le symbole $\underline{P}$ représente les paramètres propres à la structure du robot et, en particulier, les longueurs de chaque segment Li.

Comme précédemment mentionné, l'estimation des paramètres du robot, en particulier des paramètres Li, Ki, Ci0 et P, est obtenue en procédant à la mesure de la position de l'organe de préhension, à l'aide d'un appareil de mesure, en une multiplicité d'emplacements de mesure prédéterminés, situés de préférence dans la zone de travail du robot, avec pour ohacun de ces emplacements, un relevé et une mise en mémoire des valeurs des variables articulaires $\Theta i$, puis en effectuant l'identification des paramètres du modèle géométrique, grâce à une procédure itérative, implémentée par le processeur, qui comprend, à chaque pas :

- une évaluation, à l'aide du modèle géométrique, de la position de l'organe de préhension 11 en chacun des emplacements de mesure, en utilisant les variables articulaires précédemment mémorisées et les valeurs des paramètres déterminés lors du pas précédent ;

- le calcul des erreurs entre les positions mesurées et les positions calculées ; et

- la détermination d'un incrément à apporter à chaque paramètre, conduisant à une réduction des erreurs précédemment mesurées.

Sur la figure 1, on a représenté schématiquement les emplacements de mesure $P_1$ à $P_n$ par des points situés au droit de la surface horizontale d'une embase 23, ces emplacements de mesure étant repérés dans un système de coordonnées dont le plan X'O'Y' se confond avec ladite surface, et dont l'axe O'Z' passe par l'emplacement P'.

La position et l'orientation de ce système de coordonnées O'X'Y'Z' par rapport au repère de référence OXYZ lié à la structure support 12 du robot peuvent être initialement indéterminées.

Il s'agit donc là d'un paramètre que le processeur 16 aura en outre à déterminer grâce à la susdite procédure itérative.

De même, dans cet exemple, et pour les raisons qui seront exposées dans la suite de la description, la position de l'organe de préhension 11 est déterminée par la position du centre d'une sphère $S_1$ montée sur cet organe de préhension 11, à la place du préhenseur. La distance $L_p$ comprise entre ce centre et l'extrémité du segment $L_n$ constitue donc également un paramètre que le processeur 16 aura à évaluer.

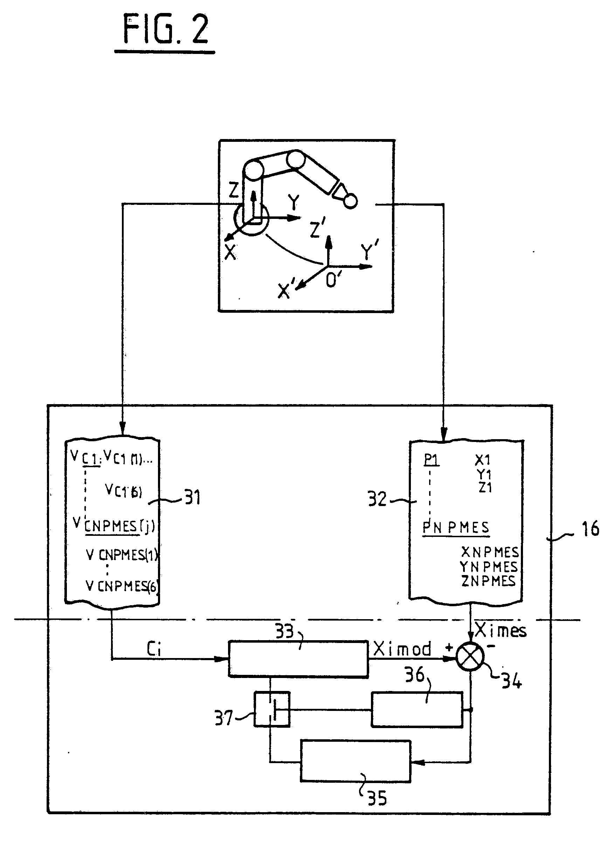

Le schéma synoptique représenté sur la figure 2 permet d'illustrer le principe du mode d'estimation des paramètres du robot précédemment décrit.

Sur cette figure, on a représenté schématiquement un robot similaire à celui de la figure 1 ainsi que le processeur 16. Celui-ci utilise deux fichiers mémoire 31, 32 dans lesquels sont mémorisées, d'une part, les valeurs en pas codeur des variables articulaires détectées par les codeurs (fichier 31) et, d'autre part, les coordonnées des positions mesurées du centre de la sphère $S_1$ portée par l'organe de préhension 11, et ce, pour tous les emplacements de mesure $P_1$ à $P_n$ (fichier 32).

Dans le fichier 31, les valeurs en pas codeur des variables articulaires ont été désignées par VC NPMES (j), terme dans lequel VC signifie valeur articulaire, NPMES est un indice désignant le numéro de l'emplacement de mesure et le terme (j) est un indice désignant le numéro du codeur.

De même, dans le fichier 32, les coordonnées du centre de la sphère $S_1$ portée par l'organe de préhension 11 ont été désignées par :

XNPMES

YNPMES

ZNPMES

dans lesquelles, les termes X, Y, Z désignent les valeurs des coordonnées dans le repère OXYZ, et les termes NPMES désignent les numéros des emplacements de mesure correspondant à ces coordonnées.

Les valeurs des variables articulaires stockées dans le fichier 31 sont destinées à être scrutées séquentiellement par le processeur 16 qui, au cours de chaque cycle, va déterminer (bloc 33), à partir du modèle géométrique du robot, les coordonnées du centre de la sphère $S_1$ (désignées par Xi mod) et ce, pour tous les points de mesure $P_1$ à $P_n$. A la sortie du bloc 33, les coordonnées ainsi calculées pour chacun des points de mesure sont transmises à un soustracteur 34 qui reçoit sur sa deuxième entrée les coordonnées correspondantes du centre de la sphère $S_1$, qui ont été préalablement mesurées et qui se trouvent stockées dans le fichier 32. Le signal d'erreur émis à la sortie du soustracteur 34 est transmis à un organe de calcul (bloc 35) qui détermine les valeurs correctives à apporter lors du cycle suivant, aux paramètres géométriques, en vue de réduire les erreurs détectées par le soustracteur 34.

Il est clair qu'au cours de ce processus, l'erreur détectée par le soustracteur 34 convergera rapidement, de cycle en cycle, vers une valeur minimale, voire même à une valeur nulle, à laquelle elle se stabilisera. La séquence pourra alors être interrompue et les valeurs des paramètres du modèle géométrique pourront être relevées.

L'interruption de la séquence pourra être avantageusement déclenchée par un organe de traitement (bloc 36) qui effectue le calcul de la somme des carrés des erreurs de coordonnées relevées à chaque cycle pour tous les emplacements de mesure et qui émet un signal d'interruption lorsque cette somme des carrés des erreurs atteint une valeur minimale. Dans l'exemple représenté, ce signal d'interruption commande l'ouverture d'un interrupteur commandable 37 situé dans la liaison entre les blocs 33 et 35.

D'une façon plus précise, le principe d'identification des paramètres du modèle géométrique du robot est basé sur les considérations suivantes :

La relation permettant d'effectuer le calcul des coordonnées

$$X \begin{bmatrix} x \\ y \\ z \end{bmatrix}$$

du centre de la sphère $S_1$ à partir du modèle géométrique du robot, est de la forme :

$$\left[ \underline{X} \right]_{3,1} = \begin{bmatrix} x0 \\ y0 \\ z0 \end{bmatrix} = F \ (\underline{P}, \ \underline{C})$$

où $\underline{P}$ est le vecteur des paramètres et $\underline{C}$ est le vecteur des variables articulaires détectées par les codeurs. Cette relation est linéaire relativement aux grandeurs de structure (longueur des segments $L_1$, $L_2$, $L_n$, $L_p$) et non linéaire par rapport aux autres paramètres et, en particulier, des paramètres Co qui apparaissent comme argument de fonctions trigonométriques.

En linéarisant le système autour d'un point de fonction $(\underline{P}, \underline{C})$, on peut écrire les relations suivantes :

$$dxo = \sum_{i=1,NPar} \frac{\delta x0}{par(i)} \cdot dpar(i) \qquad (2)$$

$$dyo = \sum_{i=1,NPar} \frac{\delta y0}{par(i)} \cdot dpar(i) \qquad (3)$$

$$dzo = \sum_{i=1,NPar} \frac{\delta z0}{par(i)} \cdot dpar(i) \qquad (4)$$

relations dans lesquelles :
\# le symbole (i) désigne un numéro de paramètre,
\# la désignation NPar correspond au nombre de paramètres,
\# la désignation par(i) correspond à un paramètre repéré par son numéro (i).
Ces relations (2), (3), (4) peuvent s'écrire, sous forme matricielle, de la façon suivante :

$$\underline{dX} = \begin{bmatrix} \dfrac{\delta x0}{\delta par(1)} - - - - \dfrac{\delta x0}{\delta par(Npar)} \\[2em] \dfrac{\delta y0}{\delta par(1)} - - - - \dfrac{\delta y0}{\delta par(Npar)} \\[2em] \dfrac{\delta z0}{\delta par(1)} - - - - \dfrac{\delta z0}{\delta par(Npar)} \end{bmatrix} \cdot \underline{dP} \qquad (5)$$

En assimilant les différentielles à de petites variations, la relation (5) devient :
$$\delta X = [M(\underline{P},\underline{C})] (\underline{P}, \underline{C}) \cdot \delta P \qquad (6)$$
relation dans laquelle $\overline{M(\underline{P},\underline{C})}$ constitue la matrice de sensibilité du système calculée au point de fonctionnement $(\underline{P}, \underline{C})$.
Pour l'ensemble des emplacements de mesure (nombre des points de mesure = NPmes) cette relation peut s'écrire :

$$\underline{\delta X} = \begin{bmatrix} \delta X_1 \\ \delta X_2 \\ \cdot \\ \cdot \\ \delta X(NPmes) \end{bmatrix} = \begin{bmatrix} [M_1 \ (\underline{P},\underline{C})] \\ [M_2 \ (\underline{P},\underline{C})] \\ \ldots \\ \ldots \\ [M_{NPmes} \ (\underline{P},\underline{C})] \end{bmatrix} \cdot \underline{\delta P} = [\underline{M} \ (\underline{P},\underline{C})] \cdot \underline{\delta P} \qquad (7)$$

$$\underbrace{\qquad}_{[U]} \qquad \underbrace{\qquad}_{[V]}$$

Il convient de noter que dans la matrice [U] les termes $X_1...X{NPmes}$ représentent chacun les coordonnées x, y, z du centre de la sphère pour chaque emplacement de mesure. La dimension de cette matrice sera donc de (3xNPmes,1). De même, la dimension de la matrice [V] qui constitue la matrice de sensibilité sera de

6

(3NPmes,NPar). La dimension de la matrice $\delta P$ sera, quant à elle, de (NPar,1).

De la relation (7), on peut en déduire que, du fait que l'on connaît l'erreur $\Delta X$ (écart entre les valeurs mesurées et les valeurs calculées), il est possible d'en déduire une estimation de la correction $\delta P$ à apporter aux paramètres en vue de minimiser cette erreur.

En réalité, on utilisera de préférence un estimateur de $\delta P$ apte à minimiser la somme des carrés des erreurs entre les coordonnées calculées à l'aide du modèle géométrique et les coordonnées mesurées, pour tous les emplacements de mesure, cette somme ayant alors pour expression :

$$\sum_{i=1}^{\text{NPmes}} \left\| \underline{X}\ \text{calculé} - \underline{X}\ \text{mesuré} \right\|^2$$

Cet estimateur sera alors de la forme : $\widehat{\delta P} = [\underline{M}(P,C)^{tr} * M(\underline{P},\underline{C})]^{-1} * M^{tr}(\underline{P},\underline{C}) * \Delta X$
ou encore :

$$\widehat{\delta P} = \left[\sum_{i=1}^{\text{NPmes}} M_i^{tr}(\underline{P},\underline{C}) * M_i(\underline{P},\underline{C})\right]^{-1} * \left(\sum_{i=1}^{\text{NPmes}} M_i(P,C)^{tr} * \delta X(i)\right)$$

(* produit matriciel)

Bien entendu, lors du premier cycle opératoire exécuté par le processeur, on partira d'un vecteur initial des paramètrès PO déterminé arbitrairement. Ensuite, les calculs successifs des $\delta P$ feront évoluer le modèle vers une solution finale réputée bonne, par la stabilisation des incréments de paramètres et par respect des conditions sur l'erreur de sortie.

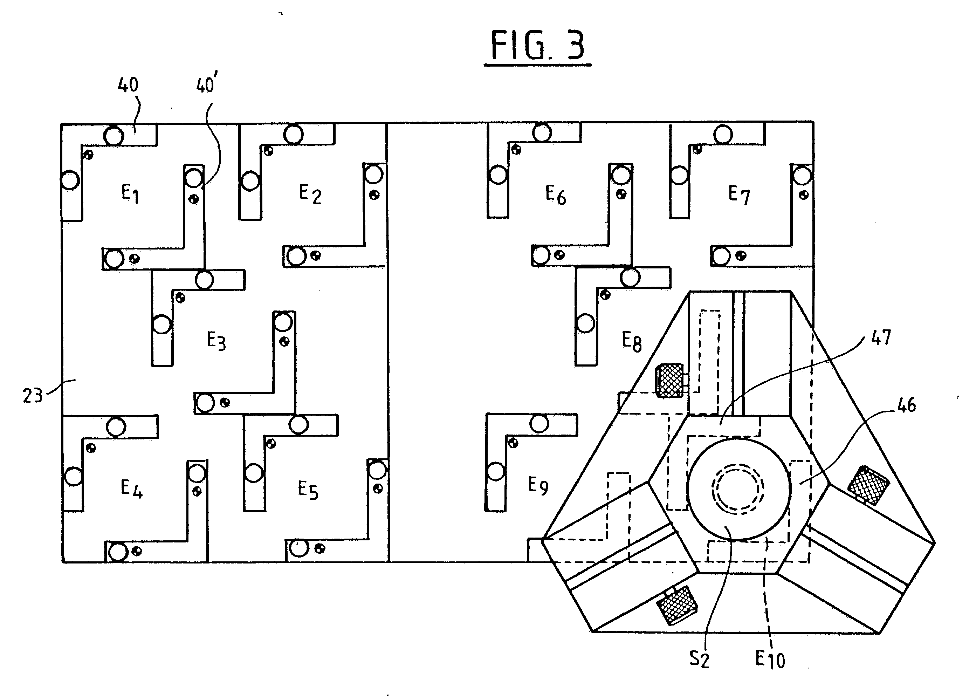

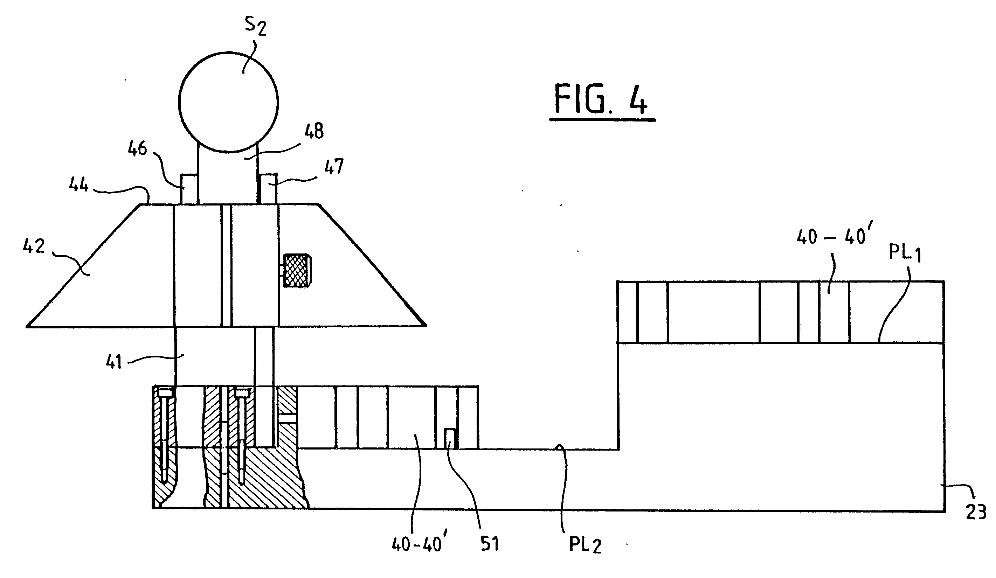

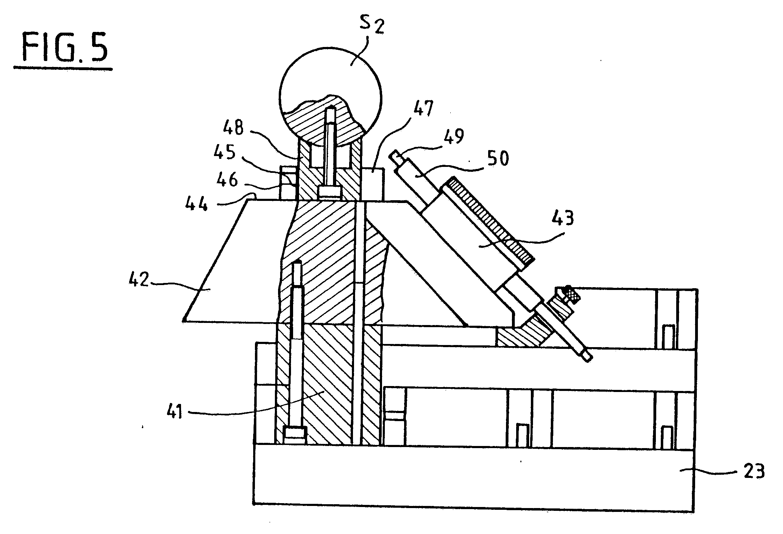

La campagne de mesures nécessaires à l'estimation des écarts entre les coordonnées calculées et les coordonnées mesurées de l'organe de préhension 11 peut être avantageusement exécutée à l'aide du dispositif de mesure représenté sur les figures 3 à 5 qui fait coopérer :

. la sphère $S_1$ portée par l'organe de préhension 11 dont le centre matérialise la position de cet organe 11,

. une base 23, se présentant sous la forme d'une platine formant deux plans horizontaux $PL_1$, $PL_2$ d'altitude différente sur lesquels sont disposés des éléments de positionnement 40, 40' en forme de cornière délimitant dix réceptacles parallélépipédiques indexés $E_1$ à $E_{10}$,

. une structure support amovible comprenant une base parallélépipédique 41, conformée de manière à pouvoir s'engager étroitement dans les réceptacles $E_1$ à $E_{10}$, et un élément de support 42 de forme pyramidale présentant, au niveau de ses arêtes, trois faces obliques sur lesquelles sont respectivement montés trois comparateurs à cadran 43 dont les axes sensibles s'étendent à 120° l'un de l'autre (en projection verticale) et font un angle de 45° avec l'horizontale.

Il convient de noter qu'en mécanique, le terme "comparateur" est couramment utilisé pour désigner un appareil de mesure de dimensions très précises à l'aide d'un palpeur à déplacement rectiligne et d'une aiguille mobile devant un cadran. Toutefois, ces "comparateurs" peuvent appartenir à divers types, tels que ceux qui effectuent une mesure de distance par contact direct avec une surface, ou ceux qui font appel pour cette mesure à l'exploitation d'un phénomène physique tel que la variation d'une résistance, d'une capacité, d'une inductance, d'un courant de Foucault, ou d'une pression d'un fluide circulant entre des ajutages et une surface dont on veut déterminer la position.

Le sommet de l'élément de support 42 est tronqué et présente une face horizontale 44 munie d'un réceptacle parallélépipédique 45 délimité par deux pièces en forme de cornière 46, 47. Ce réceptacle est destiné à recevoir l'élément de support 48, de forme parallélépipédique, d'une sphère de calibrage $S_2$. Cette sphère $S_2$, une fois positionnée grâce à l'assemblage de son élément de support 48 dans le réceptacle 45, permet de définir une référence répétable des comparateurs 43 lorsque la pointe 49 des axes sensibles 50 est amenée au contact de la sphère $S_2$.

Préalablement à toute mesure, le dispositif de mesure est "étalonné" à l'aide d'une machine à mesurer tridimensionnelle qui permet de fournir la position du centre de la sphère $S_2$ pour les neuf positions de référence $E_2$ à $E_{10}$ déterminées par les neuf cavités de la base, par rapport à la dixième $E_1$, et ce, pour une position de référence des axes sensibles 50 bien déterminée.

Cet étalonnage préalable a pour conséquence de ne pas nécessiter une fabrication extrêmement précise du dispositif.

EP 0 329 531 A1

Pour effectuer la calibration du robot, la base 23 est placée dans la zone de travail du robot. L'opérateur place ensuite le dispositif de mesure dans un premier emplacement, en engageant la base 41 dans une première cavité $E_1$ à $E_{10}$. Un détrompage 51 permet de conserver l'orientation choisie lors de la calibration de l'outillage. Après avoir ôté la sphère $S_2$, l'opérateur place la sphère de mesure $S_1$ portée par l'organe de préhension 11 du robot, de manière à la faire porter simultanément sur les extrémités 49 des trois axes sensibles 50 des comparateurs 43. Il effectue alors le relevé des mesures de ces comparateurs.

L'opérateur place ensuite le dispositif de mesure dans un second emplacement correspondant à une seconde cavité $E_1$ à $E_{10}$, puis effectue à nouveau les mêmes opérations.

Ce processus est répété pour tous les autres emplacements correspondant aux cavités restantes.

Les données fournies par les trois comparateurs 43, la connaissance du diamètre de la sphère $S_2$, de la sphère de mesure $S_1$ et des formes habituellement sphériques des extrémités 49 des axes sensibles 50 des comparateurs 43, ainsi que les positions relevées à la machine à mesurer, permettent de déterminer les coordonnées (relatives à une position de référence parmi les dix possibles $E_1$ à $E_{10}$) de la position du centre de la sphère de mesure $S_1$, avec une précision suffisante pour pouvoir estimer les paramètres géométriques du robot selon le procédé précédemment décrit.

Il est clair qu'à tout instant, y compris pendant la campagne de mesure, l'opérateur pourra recaler les comparateurs 43 à l'aide de la sphère de calibrage $S_2$.

Bien entendu, l'invention ne se limite pas au dispositif de mesure précédemment décrit.

En effet, on conçoit aisément que, selon une réalisation inverse, la structure support équipée des comparateurs 43 pourrait être montée sur l'organe de préhension 11 du robot au lieu et à la place de la sphère de mesure $S_1$. Celle-ci pourrait alors être conçue de manière à pouvoir s'assembler dans les réceptacles $E_1$ à $E_{10}$ de la base 23.

En outre, dans un cas comme dans l'autre, la sphère $S_1$ pourrait être remplacée par un corps muni d'une surface de révolution, concave ou convexe, présentant un foyer dont la position peut être calculée à partir de la connaissance des coordonnées d'au moins trois points de cette surface.

Par ailleurs, il convient d'insister sur le fait que les bénéfices de l'invention ne sont pas limités à ceux qui sont attendus lorsque la tête de préhension du robot balaye un espace tridimensionnel pour lequel l'utilisation d'une sphère est particulièrement avantageuse (si l'on prend en compte le fait que l'on ignore a priori, quelle sera la direction instantanée de la trajectoire suivie par ladite tête pour atteindre un point déterminé de l'espace).

Ainsi, dans le cas où la tête de préhension du robot ne se déplace que dans un plan, la susdite sphère pourra être remplacée par un disque ou un cylindre de diamètre connu dont l'axe reste parfaitement perpendiculaire à ce plan pendant son mouvement, pour coopérer avec un dispositif de mesure ne faisant appel qu'à deux "comparateurs" ayant, dans ce plan, des axes de mesure convergents.

Une mesure analogue peut également être prise si l'axe de la tête de préhension reste parfaitement parallèle à une direction déterminée, en équipant cette tête de préhension d'un cylindre de diamètre connu coaxial à cet axe.

## Revendications

1. Procédé pour l'estimation des paramètres du modèle géométrique d'un manipulateur du type comprenant un organe de préhension relié à une structure support par au moins une liaison cinématique animée par des moyens d'actionnement pilotés par un processeur, ainsi qu'une pluralité de capteurs aptes à déterminer les valeurs des variables de cette liaison cinématique sur lesquelles agissent les moyens d'actionnement,
caractérisé en ce qu'il comprend les phases opératoires suivantes :
- la détermination préalable d'une série de zones de détection à l'intérieur de chacune desquelles l'organe de préhension peut occuper un emplacement de mesure ($P_1$ à $P_{10}$) dont les coordonnées, dans un premier système de référence commun, peuvent être déterminées à l'aide d'un dispositif de mesure ;
- la mise en place successive de l'organe de préhension (11) dans lesdits emplacements ($P_1$ à $P_{10}$) de mesure avec, pour chacun de ces emplacements, la mesure et la mise en mémoire des coordonnées, dans le premier système de coordonnées, de la position de l'organe de préhension, à l'aide du dispositif de mesure, et le relevé et la mémorisation de la valeur des variables de la liaison cinématique correspondant à cette position, grâce aux détecteurs (17, 18, 19) équipant normalement le manipulateur ;
- l'identification des paramètres du module géométrique, grâce à une procédure d'identification itérative comprenant une succession d'étapes comportant chacune :
. une évaluation, par le processeur (16), des coordonnées dans un second système de coordonnées, de la position de l'organe de préhension (11) pour chacun des emplacements de mesure ($P_1$ à $P_{10}$), à l'aide du modèle géométrique, en utilisant les variables de la liaison cinématique précédemment mémorisées et les valeurs des paramètres déterminées lors de l'étape précédente, la valeur initiale de ces paramètres pouvant être déterminée arbitrairement,
. le calcul, par le processeur (16), des erreurs entre les positions ainsi évaluées et les positions correspondantes précédemment mesurées, et
. pour chacun des paramètres, la détermination d'un incrément permettant de réduire les erreurs

8

précédemment mesurées et la correction de ce paramètre par ledit incrément,
. la validation de la valeur des paramètres lorsque les susdites erreurs deviennent inférieures à un seuil prédéterminé.

2. Procédé selon la revendication 1,
caractérisé en ce que le premier système de coordonnées (0, X', Y', Z') est lié à l'une des zones de détection, tandis que le second système de coordonnées (O, X, Y, Z) est lié à la structure support (12) du manipulateur.

3. Procédé selon l'une des revendications 1 et 2,
caractérisé en ce qu'il comprend la détermination d'incréments de paramètres rendant minimale la somme des carrés des erreurs calculées pour tous les emplacements de mesure ($P_1$ à $P_{10}$).

4. Dispositif pour la mise en oeuvre du procédé selon l'une des revendications précédentes,
caractérisé en ce qu'il comprend, pour la détermination de la position de l'organe de préhension (11) du manipulateur, un appareillage faisant coopérer au moins un premier élément ($S_1$) possédant une surface de révolution présentant un foyer dont les coordonnées, dans un système de référence lié à cet élément, sont prédéterminées, et un deuxième élément (40 à 50) qui consiste en un dispositif de mesure apte à mesurer les coordonnées précises d'au moins trois points de cette surface dans un second système de référence (O, X', Y', Z') indépendant du premier, l'un de ces deux éléments étant solidarisé à l'organe de préhension (11), tandis que l'autre est monté sur une embase (23) disposée dans le volume de débattement du manipulateur.

5. Dispositif selon la revendication 4,
caractérisé en ce que le susdit premier élément ($S_1$) présente une forme sphérique et est conformé de manière à pouvoir se fixer à l'organe de préhension (11), et le dispositif de mesure (40 à 50) comprend des moyens (41) permettant son assemblage successif et réglable sur une pluralité de moyens d'assemblage réciproques correspondants (40, 40') prévus sur l'embase (23), et dont les positions respectives sont déterminées, soit par construction, soit par mesure préalable dans un système de référence lié à l'embase (23).

6. Dispositif selon l'une des revendications 4 et 5,
caractérisé en ce que le dispositif de mesure comporte une structure pyramidale (42) assurant le montage de trois comparateurs (43) dont les axes sensibles (50) définissent un trièdre.

7. Dispositif selon la revendication 6,
caractérisé en ce que la susdite structure pyramidale (42) comprend des moyens d'assemblage d'une sphère ($S_2$) servant à définir une référence répétable des comparateurs (43).

8. Dispositif selon la revendication 7, caractérisé en ce que les positions respectives de l'embase (23) sont repérées par la détermination de la position du centre de la sphère ($S_2$) servant à définir une référence aux comparateurs, lorsque ladite sphère ($S_2$) est assemblée sur la susdite structure pyramidale (42).

9. Dispositif selon la revendication 4,
caractérisé en ce que le susdit premier élément ($S_1$) consiste en un disque ou un cylindre, notamment dans le cas où l'organe de préhension ne se déplace que dans un plan ou dans le cas où cet organe de préhension reste parfaitement parallèle à une direction déterminée.

FIG.1

# FIG. 2

FIG. 3

FIG. 4

S2

46 48 47 44 42 41

40 − 40' PL1

40 − 40' 51 PL2

23

EP 0 329 531 A1

# FIG.5

EP 0 329 531 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | I.E.E.E. JOURNAL OF ROBOTICS & AUTOMATION vol. RA-3, no. 5, octobre 1987, NEW YORK ,U.S.A. page 377 - 385; ROTH Z.S. & MOORING B.W.: "AN OVERVIEW OF ROBOT CALIBRATION" * le document en entier * | 1-3 | G05B19/18 |
| A | IEEE PROCEEDINGS OF THE INTERN. CONFERENCE ON CYBERNETICS & SOCIETY novembre 1985, TUCSON , ARIZONA , USA page 792 - 801; LIN W.-C. & J.B. ROSS: "SEMI-AUTOMATIC CALIBRATION OF ROBOT MANIPULATOR FOR VISUAL INSPECTION TASK" * le document en entier * | 1-3 | |
| A | US-A-4725965 (KEENAN PAUL) * colonne 3, ligne 19 - ligne 35 * * colonne 5, ligne 23 - colonne 12, ligne 13; figures 1, 6-8 * | 1-3 | |
| A | PATENT ABSTRACTS OF JAPAN vol. 10, no. 80 (P-441) 2137 29 mars 1986, & JP-A-60 218108 (NIPPON DENKI K.K.) 31 octobre 1985, * voir le document en entier * | 1-3 | |
| A | US-A-4722063 (YASUKAWA KAZUYOSHI) * le document en entier * | 1-3 | DOMAINES TECHNIQUES RECHERCHES (Int. Cl.4) |
| A | US-A-4670849 (OKADA TAKUSHI) * le document en entier * | 1-3 | G05B B25J |

Le présent rapport a été établi pour toutes les revendications

| Lieu de la recherche | Date d'achèvement de la recherche | Examinateur |
|---|---|---|
| LA HAYE | 22 MAI 1989 | HAUSER L.E.R. |